# EUROPÄISCHE PATENTSCHRIFT

(11) **EP 2 395 061 B1**
(45) Veröffentlichungstag und Bekanntmachung des Hinweises auf die Patenterteilung: **05.04.2017**
(21) Anmeldenummer: 11000053.6
(22) Anmeldetag: 05.01.2011
(51) Int. Cl.: C09J 5/02

(54) **Halterung**
Mount
Fixation

(30) Priorität: 11.06.2010 WO PCT/EP2010/003526
(43) Veröffentlichungstag der Anmeldung: 14.12.2011
(73) Patentinhaber: iLi Stoffe GmbH, 94167 Tettenweis (DE)
(72) Erfinder: Lidl, Inge, 94086 Bad Griesbach (DE)
(74) Vertreter: Samson & Partner Patentanwälte mbB

(56) Entgegenhaltungen:
- WO-A1-2011/000469
- US-A1- 2005 276 674
- US-A1- 2007 235 622

## Beschreibung

### Gebiet der Erfindung

Die Erfindung betrifft einen Satz aus einer Halterung und einer Perforationsvorrichtung und ein Verfahren zum Anbringen einer Halterung an einer Wand- oder Deckenfläche.

### Hintergrund der Erfindung

Das Anbringen von beispielsweise Vorhangstangen oder anderen Einrichtungs- oder Haushaltsgegenständen an Wandflächen erfolgt üblicherweise durch mittels Schrauben an der Wand befestigte Halterungen. Für eine Befestigung solcher Halterungen mittels Schrauben sind jedoch Bohrungen vorzunehmen, die nicht nur eine spezielle Ausrüstung erfordern (Bohrmaschine, u. U. Schlagbohrer), sondern auch - gerade bei Wandstrukturen mit Hohlräumen, wie man sie in Ziegelmauern findet, oder bei brüchigen Wandstrukturen - eine gewisse Erfahrung bei der Benutzung dieser Ausrüstung. Im Bereich von Fenstern können zudem elektrische Leitungen oder Rollladenkästen usw. die Platzierung der Bohrlöcher erschweren; auch eine Beschädigung solcher Komponenten kann vorkommen. Niedrigenergiehäuser können zudem unter einer Putzschicht Isolierschichten aufweisen, die nicht verletzt werden dürfen. Des Weiteren verursacht der Bohrvorgang Lärm sowie Staub und Schmutz..

Eine Halterung für Vorhänge, die solche Nachteile vermeidet, ist in der DD 18346 gezeigt. Diese Druckschrift schlägt vor, eine Platte an eine Betondecke anzukleben und einen hakenförmiger Träger in eine auf der Platte angeordnete Hülse zu schrauben.

Des Weiteren beschreibt die US 3,595,511 eine Rollohalterung, die an einen Fensterrahmen angeklebt werden kann. Ebenso zeigt die DE 79 02 826 U1 eine Halterung beispielsweise für Vorhangstangen, welche mittels einer selbstklebenden Schicht an einem Fensterrahmen angebracht werden kann. WO 2006/097518 A2 zeigt ein Verfahren zum Befestigen eines Beschlagelements auf einer ggf. aufgerauten Oberfläche eines Holzwerkstoffelements mittels eines Klebstoffs, der zum Herstellen einer Verbindung induktiv erwärmt wird.

Während solche Halterungen zwar einfach an den jeweils dafür vorgesehenen Flächen befestigt werden können, stellen sie jedoch häufig keine für ihren Verwendungszweck ausreichende Tragkraft zur Verfügung. Vor allem haftet der Kleber an bestimmten Oberflächen - beispielsweise billiger Wandfarbe o. ä. - nicht oder nicht ausreichend, so dass die Halterung bei Belastung herunterfallen kann. Ein Aufrauen der Oberfläche kann bei typischen Wandmaterialien wie Putz oder Tapete die Klebefläche zu uneben oder aber staubig und zu bröselig hinterlassen, um eine zuverlässige Klebewirkung erzielen zu können.

US 2007/0235622 A1 offenbart eine Halterung mit einer Grundplatte, die auf einer ersten Seite mehrere über die Grundplatte verteilte, fest mit der Grundplatte verbundene Stifte zur Befestigung der Halterung an einer Wandfläche aufweist.

US 2005/276674 A1 offenbart eine vergleichbare Halterung in Form eines Mauerankers, dessen Stifte mittels eines Epoxidharzklebers in den Bohrlöchern der Wand befestigt werden.

Die Erfindung stellt sich die Aufgabe, die Anbringung vorstehender Halterungen zu vereinfachen.

Die Erfindung stellt einen Satz aus einer Halterung und einer Perforationsvorrichtung nach dem Gegenstand des unabhängigen Anspruchs 1 bereit. Ein weiterer Aspekt der Erfindung betrifft ein Verfahren zum Anbringen einer Halterung nach dem Gegenstand des unabhängigen Anspruchs 9. Bevorzugte Ausführungsbeispiele der Erfindung ergeben sich aus den abhängigen Ansprüchen, der nachfolgenden Beschreibung und der Zeichnungen.

In einer Ausführungsform weist die Grundplatte der Halterung auf einer zweiten Seite eine Vorrichtung zum Halten einer Vorhangstange oder eine Einrichtung zum Befestigen einer Vorrichtung zum Halten einer Vorhangstange auf. Des Weiteren können die Stifte spitz ausgebildet sein. Auch kann die Halterung eine Anbringeinrichtung umfassen, die das Anbringen eines Griffs an der Halterung ermöglicht, etwa zwei Schlitze in der Grundplatte, die einen Grundplattenabschnitt definieren, auf den ein entsprechender Aufnahmeabschnitt des Griffs aufsteckbar ist.

Die Erfindung betrifft einen Satz aus einer oben beschriebenen Halterung und einer Perforationsvorrichtung. Die Perforationsvorrichtung weist eine Grundplatte auf, die auf einer ersten Seite mit mehreren über die Grundplatte verteilten, spitzen Perforationselementen versehen ist. Die Verteilung der Stifte über die Grundplatte der Halterung entspricht der Verteilung der Perforationselemente über die Grundplatte der Perforationsvorrichtung. Meist ist eine zweite Seite der Grundplatte der Perforationsvorrichtung so ausgeführt, dass sie eine Angriffsfläche für das Ausüben von Kraft bietet. Des Weiteren weist die Perforationsvorrichtung in einigen Ausführungsformen einen Griff auf, der in Bezug auf eine durch die Grundplatte der Perforationsvorrichtung definierte Ebene in einem Winkel in Richtung der zweiten Seite der Grundplatte verläuft.

Sowohl der Satz aus einer Halterung und einem Griff als auch der Satz aus einer Halterung und einer Perforationsvorrichtung umfasst außerdem in einigen Ausführungsformen eine Portion eines Klebemittels. In einer Ausführungsform ist die Länge der Stifte der Halterung auf die übliche Dicke von Putzschichten an Gebäudeinnenwänden abgestimmt.

Darüber hinaus betrifft die Erfindung auch ein Verfahren zum Anbringen einer Halterung mit einer Grundplatte an einer Wand- oder Deckenfläche. Die Halterung ist auf einer ersten Seite mit mehreren über die Grundplatte verteilten, fest mit der Grundplatte verbundenen Stiften versehen. Gemäß dem Verfahren werden mehrere Löcher in der Wand- oder Deckenfläche ausgebildet, deren Verteilung über die Wand- oder Deckenfläche der Verteilung der Stifte über die Grundplatte der Halterung entspricht. In wenigstens eines der Löcher wird ein Klebemittel eingebracht, und die Stifte der Halterung werden in die Löcher eingeführt.

Zum Ausbilden der Löcher wird eine Perforationsvorrichtung verwendet, die eine Grundplatte aufweist, die auf einer ersten Seite mit mehreren über die Grundplatte verteilten, spitzen Perforationselementen versehen ist, wobei die Verteilung der Perforationselemente über die Grundplatte der Perforationsvorrichtung der Verteilung der Stifte über die Grundplatte der Halterung entspricht. Dabei werden die Perforationselemente der Perforationsvorrichtung an der Wand- oder Deckenfläche angesetzt. Dann wird Kraft auf eine zweite Seite der Grundplatte der Perforationsvorrichtung ausgeübt, um die Perforationselemente in die Wand- oder Deckenfläche zu treiben und so die Löcher auszubilden. Meist wird das Verfahren fortgesetzt, indem die Perforationselemente mittels eines Griffs der Perforationsvorrichtung aus den Löchern herausgezogen werden.

### Kurze Beschreibung der Zeichnungen

Die folgenden Figuren erläutern die Erfindung an Hand beispielhafter Ausführungsformen näher, wobei:
- Figur 1: eine schematische Darstellung einer Ausführungsform einer erfindungsgemäßen Halterung ist;
- Figur 2: eine schematische Darstellung einer anderen Ansicht der Halterung aus Figur 1 ist;
- Figur 3: eine schematische Darstellung einer weiteren Ansicht der Halterung aus Figur 1 ist;
- Figur 4: eine schematische Darstellung der Halterung aus Figur 1 zur Erläuterung der Verteilung der Stifte über die Grundplatte der Halterung zeigt;
- Figur 5: eine schematische Darstellung einer Ausführungsform einer Perforationsvorrichtung ist;
- Figur 6: eine schematische Darstellung einer anderen Ansicht der Perforationsvorrichtung aus Figur 5 ist;
- Figur 7: eine schematische Darstellung einer weiteren Ansicht der Perforationsvorrichtung aus Figur 5 einer weiteren Perspektive ist;
- Figur 8: eine schematische Darstellung eines Perforationselement-Einzelteils ist;
- Figur 9: eine schematische Darstellung einer weiteren Ausführungsform einer erfindungsgemäßen Halterung ist;
- Figur 10: eine schematische Darstellung einer anderen Ansicht der Halterung aus Figur 9 ist;
- Figur 11: eine schematische Darstellung einer weiteren Ansicht der Halterung aus Figur 9 ist; und
- Figur 12: eine Explosionsdarstellung der Halterung aus Figur 9 ist.

### Detaillierte Beschreibung von Ausführungsbeispielen

Die erfindungsgemäße Halterung nach den Ausführungsbeispielen ist dazu ausgelegt, an einer Wand- oder Deckenfläche befestigt zu werden, typischerweise an einer Wand- oder Deckenfläche eines Gebäudeinnenraums oder an einer Gebäudeaußenwand. Derartige Wand- und Deckenflächen weisen häufig eine Putzschicht auf, die teils mit einer oder mehreren Tapeten- und/oder Farbschichten bedeckt ist. Bei solchen Materialen ergeben sich häufig Probleme beim Anbringen von konventionellen Halterungen, vor allem wenn eine hohe Tragkraft gewünscht wird und auf Bohren verzichtet werden soll. Beispielsweise sind Putzschichten, gerade Gipsputzschichten, oft weich und bröselig und brechen leicht aus. Tapeten haften nicht zuverlässig an darunterliegenden Schichten, und Farbe kann abblättern. Die erfindungsgemäße Halterung kann auch unter solch ungünstigen Bedingungen sicher und einfach an einer Wand- oder Deckenfläche befestigt werden und eine hohe Tragkraft bereitstellen.

Zu diesem Zweck weist die Grundplatte der Halterung nach den Ausführungsbeispielen auf einer ersten Seite mehrere über die Grundfläche verteilte Stifte oder dergleichen auf. Diese Stifte sind dazu vorgesehen, in entsprechend verteilte Löcher in der Wand- oder Deckenfläche eingeführt und dort verklebt zu werden. Da die mehreren Stifte Belastungen auf mehrere Punkte der Wand- oder Deckenfläche verteilen, ergibt sich eine sichere Befestigung von hoher Tragkraft.

Meist sind die Stifte in einigen Ausführungsbeispielen länglich ausgebildet, denn längere Stifte bieten grundsätzlich einen besseren Halt in der Wand. Jedoch erfordern längere Stifte einen größeren Aufwand beim Ausbilden der Löcher, in die sie eingeführt werden sollen. Auch können beim Ausbilden von sehr tiefen Löchern unter der Putzschicht liegende Schichten, etwa Ziegelschichten oder bei Niedrigenergiehäusern Isolierschichten, oder Komponenten wie Rollladenkästen beschädigt werden. Daher ist die Länge der Stifte in einer Ausführungsform an die übliche Dicke von Putzschichten in Gebäudeinnenräumen angepasst, die gewöhnlich etwa 2,5 cm beträgt. Vor diesem Hintergrund hat sich eine Länge der Stifte zwischen 1 und 1,5 cm als besonders günstig erwiesen, um eine Verletzung von unter der Putzschicht liegenden Schichten auf jeden Fall zu vermeiden und trotzdem einen ausreichenden Halt zu gewährleisten.

Des Weiteren sind die Stifte in einigen Ausführungsbeispielen aus fertigungstechnischen Gründen und in Anpassung an die normale Form von Löchern im Querschnitt meist rund ausgeführt, obwohl auch andere Formen möglich sind (viereckig, dreieckig ...). Der Durchmesser der Stifte ist dabei in vielen Ausführungsformen relativ klein, um den Aufwand beim Ausbilden der Löcher gering zu halten, wird aber in Abhängigkeit vom Material groß genug gewählt, um die Gefahr eines Abbrechens unter normalen Bedingungen gering zu halten. Häufig sind die Stifte aus Edelstahl, Metall, Kunststoff oder ähnlichen Materialien hergestellt.

Um Belastungen auf mehrere verschiedene Punkte der Wand- oder Deckenfläche zu verteilen und einen möglichst sicheren Halt der Halterung an der Wand- oder Deckenfläche zu gewährleisten, sind die Stifte in einigen Ausführungsbeispielen regelmäßig und unter Ausnutzung der gesamten Grundplattenfläche über die Grundplatte verteilt. Die Verteilung der Stifte über die Grundplatte definiert die Abstände der Stifte und ihre relative Lage.

Damit die Halterung mittels der Stifte an der Wand befestigt werden kann, sind die Stifte in einigen Ausführungsbeispielen fest mit der Grundplatte der Halterung verbunden. Beispielsweise wird dies durch eine einstückige Ausführung von Grundplatte und Stiften erreicht. Alternativ können Grundplatte und Stifte in einer unlösbaren Verbindung miteinander verbunden sein, beispielsweise durch eine Schweiß-, Löt-, Press-, Niet- oder Klebverbindung.

Bei der Grundplatte der Halterung handelt es sich in einigen Ausführungsbeispielen um eine flächige Scheibe, die beispielsweise rechteckig, länglich oder rund ausgebildet ist. Eine runde Grundplatte macht eine exakte Ausrichtung mit Wasserwaage o. ä. beim Anbringen an die Wand- oder Deckenfläche unnötig. Als Standardform ist eine rechteckige Grundplatte häufig am einfachsten zu fertigen. Jedoch kann die Grundplatte auch beliebige andere Formen aufweisen, die entsprechend dem späteren Verwendungszweck sowie beispielsweise aus ästhetischen Gesichtspunkten oder in Anpassung an räumliche Gegebenheiten gewählt werden. Meist ist die Grundplatte - abhängig vom verwendeten Material - einige Millimeter bis einige Zentimeter dick: Ist die Grundplatte beispielsweise aus Edelstahl, Metall oder Holz gefertigt, reicht eine Dicke von wenigen Millimetern aus, um eine ausreichende Stabilität der Grundplatte zu gewährleisten; Kunststoff- oder Glasgrundplatten werden - je nach verwendetem Kunststoff - häufig etwas dicker ausgeführt. Die Grundplatte ist nicht notwendigerweise als Scheibe ausgebildet; grundsätzlich steht ihrer keilförmigen oder beliebigen abweichenden Ausgestaltung, beispielsweise auch in Anpassung an eine nicht ebene Wand- oder Deckenfläche, nichts im Wege, solange die Stifte auf einer ersten Seite der Grundplatte verteilt werden können und die Funktion der Halterung im Auge behalten wird.

Die Halterung ist in einigen Ausführungsbeispielen meist so ausgebildet, dass die erste Seite der Grundplatte nach Einführen der Stifte in die Löcher an der Wand- oder Deckenfläche anliegen soll. Um die Befestigung der Halterung noch zu verbessern, ist die erste Seite der Grundplatte in den Bereichen zwischen den Stiften in einigen Ausführungsformen als Klebefläche ausgeführt und kann dort mit der Wand- oder Deckenfläche verklebt werden. Hierfür wird in einigen Ausführungsformen die Oberfläche der ersten Seite der Grundplatte in den Bereichen zwischen den Stiften und damit die Klebefläche vorteilhaft vergrößert. Beispielsweise werden die Bereiche durch Schleifen aufgeraut, so dass ein unruhiges Muster entsteht. Klebemittel kann dann etwa vor dem Einführen der Stifte in die Löcher auf die erste Seite der Grundplatte zwischen den Stiften aufgebracht werden. Alternativ wird davon ausgegangen, dass Klebemittel in die Löcher eingebracht (etwa indem es auf die Stifte aufgetragen und diese in die Löcher eingeführt werden) und durch das Einführen der Stifte teilweise aus den Löchern herausgedrückt wird und sich automatisch auf um die Löcher liegende Bereiche der ersten Seite der Grundplatte verteilt.

In den meisten Ausführungsbeispielen sind die Halterungen dazu ausgelegt, Haushalts- oder Einrichtungsgegenstände zu tragen. Beispielsweise handelt es sich bei der Halterung um eine Vorhangstangenhalterung, wobei in einer Ausführungsform mehrere Halterungen eine Vorhangstange zwischen sich halten. In anderen Ausführungsformen umfasst die Halterung einen Haken oder ähnliches, an den Haushaltsgegenstände wie Handtücher oder Küchenutensilien gehängt werden können.

Um solche Gegenstände tragen zu können, weist die Grundplatte der Halterung in einer Ausführungsform auf ihrer der ersten Seite gegenüberliegenden zweiten Seite eine Vorrichtung zum Halten einer Vorhangstange oder eines anderen Gegenstands auf. Dies kann etwa ein Haken, ein ringförmiger Halter oder eine beliebige andere Vorrichtung sein, die auf den Verwendungszweck der Halterung abgestimmt ist, in einigen Fällen sogar nur ein einfaches Bohrloch o. ä., mit dessen Hilfe der Gegenstand an der Halterung festgeschraubt bzw. befestigt werden kann. In einer Ausführungsform ist auf der Grundplatte ein Aufnahmeabschnitt angeordnet, der den Gegenstand in einer Steckverbindung aufnehmen kann.

Alternativ weist die Grundplatte der Halterung auf ihrer zweiten Seite eine Einrichtung zum Befestigen einer Vorrichtung zum Halten einer Vorhangstange oder eines anderen Gegenstands auf. Dies kann etwa ein Gewindeträger mit Innen- oder Außengewinde oder eine beliebige andere Einrichtung sein, die das lösbare Befestigen einer Vorrichtung ermöglicht, die wiederum den Gegenstand, etwa die Vorhangstange, halten kann. Diese Ausgestaltung macht die Halterung flexibler; so kann die Vorrichtung zum Halten eines Gegenstands ausgewechselt werden, ohne die Grundplatte von der Wand lösen und neu anbringen zu müssen. Außerdem ist die Halterung in dieser Ausgestaltung für die Montage in der Regel leichter zu handhaben.

Um ein einfaches Ausbilden von Löchern zu ermöglichen, wie sie für die Befestigung der Halterung benötigt werden, ist die Halterung in einer Ausführungsform als Perforationsvorrichtung ausgeführt.

In dieser Ausführungsform sind die Stifte der Halterung spitz ausgebildet, so dass sie in ihrer Form Nägeln ähneln, um ein Ausbilden von Löchern in der Wand- oder Deckenfläche einfach zu ermöglichen. Des Weiteren ist die zweite Seite oder ein Teil der zweiten Seite der Grundplatte der Halterung meist dazu ausgebildet, eine geeignete Angriffsfläche für eine Kraft passender Richtung zu bieten, welche die Grundplatte dann auf die Stifte überträgt. Hierzu ist die zweite Seite der Grundplatte in einigen Fällen zumindest teilweise eben oder weist zumindest mehrere auf einer Ebene liegende Punkte auf. Somit kann ein Bediener die Stifte der Halterung an eine Wand- oder Deckenfläche ansetzen und etwa mit einem Hammer auf die zweite Seite der Grundfläche schlagen, bis die Stifte in die Wand- oder Deckenfläche eindringen und so die Löcher ausbilden.

Des Weiteren kann in einer Ausführungsform an der Grundplatte ein Griff angebracht werden, den ein Bediener fassen kann.

Hierfür kann die Grundplatte der Halterung eine Anbringeinrichtung aufweisen, an welcher ein Griff in einer Weise lösbar anbringbar ist, dass ein Bediener über diesen eine Kraft auf die Halterung ausüben kann, um die Stifte aus Löchern in der Wand- oder Deckenfläche herauszuziehen. Im einfachsten Fall kann die Anbringeinrichtung beispielsweise eine Wölbung der Grundplatte sein, die ermöglicht, ein Ende des Griffs unter die Grundplatte zu schieben, wenn deren Stifte in den Löchern stecken und daher die erste Seite der Grundplatte an der Wand anliegt. Dann kann mit dem Griff eine Kraft in Richtung von der Wand weg ausgeübt werden und die Halterung mit Hilfe des Griffs sozusagen von der Wand weggehebelt werden. Andere Anbringeinrichtungen erlauben eine lösbare Verbindung von Griff und Halterung, bei der ein Ausüben von in verschiedenen Richtungen wirkenden Kräften möglich ist, um die Stifte aus Löchern in einer Wand- oder Deckenfläche zu entfernen. Hierfür könnte beispielsweise ein Griff mit entsprechender Aufnahmeöffnung oder entsprechendem Aufnahmeabschnitt auf einen hierfür ausgebildeten Abschnitt der Grundplatte entsprechender Abmessungen o.ä. aufgesteckt oder aufgeschoben werden, oder ein hierfür ausgebildeter Abschnitt des Griffs entsprechender Abmessungen könnte in einen entsprechenden Aufnahmeabschnitt der Halterung eingeschoben oder gesteckt werden. In weiteren Ausführungsformen ermöglicht die Anbringeinrichtung eine lösbare Befestigung durch Schrauben oder dergleichen, die ein Ausüben von Kraft in jeder beliebigen Richtung auf die Halterung erlaubt. Andere Anbringeinrichtungen sind denkbar.

Alternativ kann ein Griff ein Teil der Halterung und unlösbar mit dieser verbunden sein. Beispielsweise kann die Vorrichtung zum Halten des von der Halterung zu haltenden Elements als Griff, etwa in der Form eines Knaufs o. ä., ausgeführt sein, den ein Bediener fassen kann, um die Stifte aus den Löchern herauszuziehen. Es ist auch möglich, einen zusätzlichen Griff vorzusehen, der von einer Vorrichtung zum Halten des zu haltenden Elements oder einer Befestigungsvorrichtung hierfür optisch verdeckt werden kann.

Damit ein Bediener den Griff auch dann greifen kann, wenn die Stifte in die Wand- oder Deckenfläche getrieben sind, sind die Anbringeinrichtung und/oder der Griff in einigen Ausführungsformen so ausgebildet, dass sich der mittels der Anbringeinrichtung an der Halterung angebrachte Griff nicht in einer Ebene mit der Grundplatte befindet, sondern einen Winkel dazu bildet. Beispielsweise kann hierzu der Griff in Richtung der zweiten Seite der Grundplatte abgeknickt sein und mit der zweiten Seite der Grundplatte einen Winkel kleiner als 180° bilden. Alternativ kann diese Stellung des Griffs erreicht werden, wenn eine entsprechend angeordnete oder ausgebildete Anbringeinrichtung gewählt wird. So kann ein Grundplattenabschnitt, auf den eine Aufnahmeöffnung eines Griffs aufgesetzt werden kann, in einem entsprechenden Winkel schräg verlaufen. Da die erste Seite der Grundplatte bei in die Wand- oder Deckenfläche getriebenen Stiften meist an der Wand- oder Deckenfläche anliegt, steht der Griff bei einer solchen Ausführungsform in einem Winkel von der Wand- oder Deckenfläche ab. Damit kann ein Bediener den Griff auch in dieser Situation komfortabel fassen, um die Stifte aus den Löchern zu ziehen. In einer weiteren Ausführungsform ist der Griff aus einem eingeschränkt biegsamen Material, das ein Abheben des Griffs von der Wand- oder Deckenfläche ermöglicht, aber trotzdem ein Ausüben einer Kraft auf die Halterung erlaubt, um die Stifte aus den Löchern zu entfernen.

Bevor oder nachdem die Stifte in die Wand- oder Deckenfläche getrieben wurden, kann der Griff somit an der Halterung angebracht und die Halterung daran aus der Wand- oder Deckenfläche herausgezogen werden. Dann kann der Bediener optional den Griff entfernen und das Klebemittel etwa auf die Stifte geben, bevor er die Stifte wieder in die Löcher einführt. Sobald das Klebemittel getrocknet ist, bietet die Halterung einen sehr zuverlässigen Halt und kann auch beträchtliche Lasten tragen.

Die Erfindung beinhaltet zudem eine von der Halterung getrennte Perforationsvorrichtung bereit, um das Ausbilden der Löcher zu ermöglichen, wie sie für die Befestigung der Halterung benötigt werden. Die Perforationsvorrichtung weist eine Grundplatte mit mehreren auf einer ersten Seite der Grundplatte angeordneten und über die Grundplatte verteilten, spitzen Perforationselementen auf. Die Verteilung der Perforationselemente über die Grundplatte der Perforationsvorrichtung definiert die Abstände der Perforationselemente und ihre Lage in Bezug zueinander.

Zweckmäßigerweise entspricht die Verteilung der Perforationselemente dabei der Verteilung der Stifte über die Grundplatte einer Halterung (bzw. die Abstände und Lage der Stifte in Bezug aufeinander entsprechen den Abständen und der Lage der Perforationselemente in Bezug aufeinander). Durch Anwendung der Perforationsvorrichtung in einer Wand- oder Deckenfläche entstandene Löcher sind daher so angeordnet, dass sie der Lage der über die Grundplatte der Halterung verteilten Stifte der Halterung entsprechen und diese somit aufnehmen können. Hierbei ist die Grundplatte der Perforationsvorrichtung beispielsweise so ausgebildet, dass die Größe ihrer ersten Seite der Größe der ersten Seite der Halterung entspricht.

Häufig sind die Perforationselemente mit der Grundplatte der Perforationsvorrichtung fest verbunden, damit die Perforationselemente in Bezug auf die Grundplatte nicht verrutschen oder falsch angebracht werden können. Die Perforationselemente und die Perforationsvorrichtung können beispielsweise einstückig gefertigt sein, oder sie stehen in einer unlösbaren Verbindung miteinander, etwa einer Schweiß-, Löt-, Press- oder Klebverbindung.

Meist sind die Perforationselemente nagelähnlich ausgebildet, spitz, länglich und von rundem Querschnitt. Bei auf eine Halterung abgestimmten Ausführungsformen einer Perforationsvorrichtung ist normalerweise auch die Form der Perforationselemente auf die Form der Stifte der Halterung abgestimmt, um die Stifte problemlos in die mittels der Perforationsvorrichtung ausgebildeten Löcher einführen zu können. Beispielsweise haben die Perforationselemente dann ähnliche, aber etwas größere Abmessungen als die Stifte. Insbesondere sind die Perforationselemente lang genug geformt, damit entstehende Löcher die Stifte vollständig aufnehmen können, so dass die erste Seite der Halterung bei in die Löcher eingeführten Stiften an der Wand- oder Deckenfläche anliegt. Des Weiteren wird der Querschnitt der Perforationselemente so gewählt, dass die Stifte der Halterung ohne großen Kraftaufwand in die entstehenden Löcher gesteckt werden können, ohne aber einen großen Spielraum vorzusehen.

In einer Ausführungsform ist auch die Länge der Perforationselemente auf die gewöhnliche Dicke von Putzschichten an Gebäudeinnenwänden abgestimmt, damit die Perforationselemente die unter der Putzschicht liegende Grundschicht oder Komponenten wie Rollladenkästen nicht beschädigen.

Die zweite Seite der Grundplatte der Perforationsvorrichtung ist dazu ausgebildet, eine geeignete Angriffsfläche für eine Kraft passender Richtung zu bieten. Diese Kraft überträgt die Grundplatte dann auf die Perforationselemente. Hierzu ist die zweite Seite der Grundplatte in einigen Fällen zumindest teilweise eben ausgebildet oder weist mehrere auf einer Ebene liegende Punkte auf. Ein Bediener kann dann die Perforationselemente der Perforationsvorrichtung an eine Wand- oder Deckenfläche ansetzen und etwa mit einem Hammer auf die zweite Seite der Grundfläche schlagen, bis die Perforationselemente in die Wand- oder Deckenfläche eindringen und so die Löcher ausbilden.

Des Weiteren weist die Perforationsvorrichtung in einigen Ausführungsformen einen Griff auf, etwa in der Form eines Fortsatzes der Grundplatte oder eines über eine Anbringeinrichtung der Perforationsvorrichtung an dieser anbringbaren Griffs, an dem ein Bediener die Perforationsvorrichtung fassen kann. Um ein Greifen des Griffs auch dann zu ermöglichen, wenn die Perforationselemente in die Wand- oder Deckenfläche getrieben sind, ist dieser in einer Ausführungsform nicht in einer Ebene mit der Grundplatte ausgebildet oder angerbacht, sondern bildet einen Winkel dazu. Hierfür ist etwa ein als Griff dienender Fortsatz in Richtung der zweiten Seite der Grundplatte abgeknickt und bildet mit der zweiten Seite der Grundplatte einen Winkel kleiner als 180°. Da die erste Seite der Grundplatte bei in die Wand- oder Deckenfläche getriebenen Perforationselementen an der Wand- oder Deckenfläche anliegt, steht der Griff in diesem Zustand also in einem Winkel von der Wand- oder Deckenfläche ab. Damit kann ein Bediener den Griff auch in dieser Situation fassen, um die Perforationselemente aus den Löchern zu ziehen.

Die Perforationsvorrichtung kann beispielsweise aus Edelstahl, Metall, Kunststoff, Holz oder anderen Materialien ausgebildet sein. Teilweise sind die Perforationselemente aus einem anderen, härteren Material als die übrigen Teile der Perforationsvorrichtung ausgebildet. Wird die Perforationsvorrichtung als Teil eines Satzes mit einer Halterung vertrieben (s. unten), wird häufig ein billiges Material wie Blech oder Kunststoff gewählt, ggf. mit Perforationselementen aus einem härteren Material, da nicht mit einer häufigen Verwendung der Perforationsvorrichtung zu rechnen ist: Voraussichtlich wird die Halterung des Satzes nicht mehr als ein oder zwei Mal an einer Wand- oder Deckenfläche angebracht werden, so dass auch die dazugehörige Perforationsvorrichtung nur ein oder zwei Perforationsvorgänge aushalten muss.

Die beschriebene Halterung kann mit dem Verfahren, das die Erfindung ebenfalls bereitstellt, einfach an einer Wand- oder Deckenfläche beispielsweise in einem Gebäudeinnenraum angebracht werden.

Gemäß dem Verfahren werden zunächst mehrere Löcher in der Wand- oder Deckenfläche ausgebildet, deren Verteilung (Abstand und relative Lage) über die Wand- oder Deckenfläche der Verteilung der Stifte (Abstand und relative Lage) über die Grundplatte der Halterung entspricht, so dass sie die Stifte der Halterung aufnehmen können.

Hierzu kann - wie bereits oben detailliert beschrieben - in einer Ausführungsform die mit spitzen Stiften ausgebildete Halterung selbst verwendet werden, indem die Stifte an die Wand- oder Deckenfläche angesetzt und in diese hineingetrieben werden.

Alternativ ermöglicht eine oben beschriebene Perforationsvorrichtung in einer Ausführungsform des Verfahrens ein einfaches Ausbilden der Löcher. Hierfür wird eine Perforationsvorrichtung verwendet, bei der die Verteilung der Perforationselemente (Abstand und relative Lage) über die Grundplatte der Perforationsvorrichtung der Verteilung der Stifte über die Grundplatte der Halterung entspricht. Die Perforationselemente dieser Perforationsvorrichtung werden zum Ausbilden der Löcher an die Wand- oder Deckenfläche angesetzt. Auf die zweite Seite der Grundplatte der angesetzten Perforationsvorrichtung wird Kraft ausgeübt, um die Perforationselemente in die Wand- oder Deckenfläche zu treiben und so die Löcher auszubilden. Hierzu wird etwa ein Hammer verwendet. Die spitze Form der Perforationselemente erlaubt ihr einfaches Eindringen in die Wand- oder Deckenfläche.

Meist werden als Nächstes die Stifte bzw. die Perforationselemente wieder aus den Löchern herausgezogen, etwa mittels eines oben beschriebenen Griffs. Hierfür kann ein Bediener in einer Ausführungsform den von der Wand abstehenden Griff fassen und daran ziehen, um wiederum die Stifte bzw. Perforationselemente aus den Löchern zu ziehen. Wegen der meist nagelähnlichen Form der Stifte bzw. Perforationselemente ist dies normalerweise problemlos möglich.

In wenigstens eins, vorzugweise mehrere der über die Wand- oder Deckenfläche verteilten Löcher wird gemäß dem Verfahren ein Klebemittel eingebracht. Beispielsweise wird das Klebemittel mit einem geeigneten Instrument in die Löcher gestrichen. Alternativ wird etwa ein Tropfen des Klebemittels auf den Locheingang aufgebracht, so dass sich das Klebemittel durch Einführen der Stifte in das Loch darin verteilt. In einer Ausführungsform wird das Klebemittel auf die Stifte aufgebracht und durch Einführen der Stifte in die Löcher in diese eingebracht.

Vor dem Einbringen des Klebemittels in die Löcher werden in einer Ausführungsform Staub und Rückstände aus den Löchern herausgesaugt, die sich beim Ausbilden der Löcher ggf. gebildet haben. Dies kann etwa einfach mittels eines Staubsaugers geschehen. Außerdem sehen manche Ausführungsformen vor, Tiefengrund oder andere Mittel zum Verfestigen des Putzes in die Löcher einzubringen, etwa mit einer Spritze o. ä., um optimale Voraussetzung für den Klebevorgang zu schaffen.

Des Weiteren wird in einigen Ausführungsformen auf die erste Seite der Grundplatte der Halterung in den Bereichen zwischen den Stiften Klebemittel aufgebracht, wie bereits oben beschrieben.

Das verwendete Klebemittel ist in einer Ausführungsform besonders dazu geeignet, auf Putzflächen eine zufriedenstellende Klebeverbindung zu gewährleisten, denn die Löcher werden meist zum größten Teil in der Putzschicht verlaufen. Des Weiteren hat es sich häufig als vorteilhaft erwiesen, ein wasser- oder wärmelösliches oder abziehbares oder anderweitig lösbares Klebemittel zu verwenden, um ein rückstandsloses Entfernen der Halterung von der Wand- oder Deckenfläche zu ermöglichen. Wird etwa ein wärmelösliches Klebemittel verwendet, kann das Klebemittel durch gezielte Wärmeeinwirkung, etwa durch einen Fön, geschmolzen und die Klebeverbindung dadurch gelöst werden. Danach kann die Halterung, etwa wiederum mittels eines an eine Anbringeinrichtung ansetzbaren Griffs, aus den Löchern herausgezogen und so entfernt werden.

Gemäß dem Verfahren werden die Stifte der Halterung des Weiteren in die Löcher eingeführt. Wie bereits oben beschrieben, kann das Einführen der Stifte in die Löcher in einigen Ausführungsformen mit dem Einbringen des Klebemittels zusammenfallen, etwa wenn das Klebemittel auf die Stifte aufgebracht und durch Einführen der Stifte in die Löcher eingebracht wird. In den meisten Ausführungsformen werden die Stifte zur Gänze in die Löcher eingeführt, bis die erste Seite der Grundplatte der Halterung an der Wand anliegt. Nach dem Einführen ist ggf. das Klebemittel zu aktivieren, je nach verwendeter Art des Klebemittels. Ansonsten bleibt lediglich abzuwarten, bis das Klebemittel getrocknet ist, bevor die Halterung belastet werden kann.

Die Erfindung stellt auch einen Satz aus einer Halterung und einem Griff sowie einen Satz aus einer Halterung und einer Perforationsvorrichtung bereit. Diese Komponenten wurden bereits oben beschrieben. Solche Sätze beinhalten sozusagen die Grundausstattung für die obigen Verfahren.

In einer Ausführungsform des Satzes aus der Halterung und der Perforationsvorrichtung sind Halterung und Perforationsvorrichtung aufeinander abgestimmt. Insbesondere ist die Verteilung der Perforationselemente über die Grundplatte der Perforationsvorrichtung mit der Verteilung der Stifte über die Grundplatte der Halterung abgestimmt, und die Form der Perforationselemente ist auf die Form der Stifte abgestimmt. So können durch einmaliges Anwenden der Perforationsvorrichtung Löcher geeigneter Verteilung und Größe ausgebildet werden, um die Stifte der Halterung aufzunehmen.

Ebenso ist ein Griff in einem Satz aus einer Halterung und einem Griff in einer Ausführungsform auf die Halterung bzw. auf ihre Anbringeinrichtung abgestimmt.

In einer Ausführungsform umfassen die erfindungsgemäßen Sätze zusätzlich eine portionierte, beispielsweise luftdicht verpackte Menge eines Klebemittels, die beispielsweise kurz vor dem Einführen der Stifte der Halterung in die Löcher eingebracht werden kann.

Um eine flexible Verwendung einer Halterung für das Halten verschiedener Gegenstände zu ermöglichen, umfassen die Sätze in einer Ausführungsform zusätzlich eine oder mehrere Vorrichtungen zum Halten einer Vorhangstange oder anderer Gegenstände. Dies ist besonders dann praktisch, wenn die Halterung eine Einrichtung zum Befestigen einer solchen Vorrichtung, wie ein Gewinde, umfasst. Beispielsweise könnte ein Satz mehrere verschiedene Vorrichtungen zum Halten von Vorhangstangen verschiedener Größen umfassen, die alle zu dem Gewinde der Halterung passen und somit beliebig ausgetauscht werden können.

Insgesamt stellen die verschiedenen Aspekte der Erfindung ein bestechend einfaches Konzept zum Anbringen einer Halterung bereit, das Bohren unnötig macht, aber trotzdem einen sicheren Halt der Halterung gewährleistet. Die mehreren in der Wand- oder Deckenfläche verklebten Stifte verleihen der Halterung eine hohe Tragkraft, ohne dass die Halterung eine unästhetisch große Grundplatte aufweisen muss. Bei geeigneter Ausgestaltung von Halterung und Perforationsvorrichtung wird nur die Putzschicht verletzt, nicht aber die darunter liegende Grundschicht oder darunter liegende Komponenten wie Rollladenkästen.

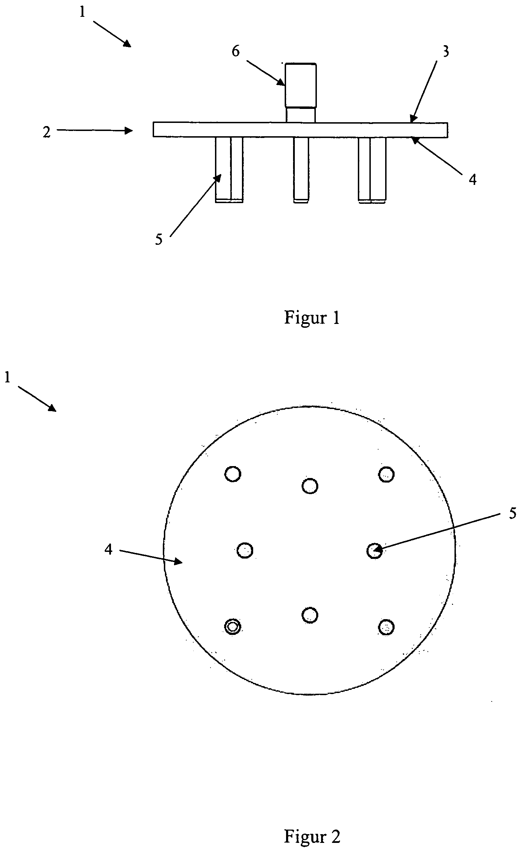

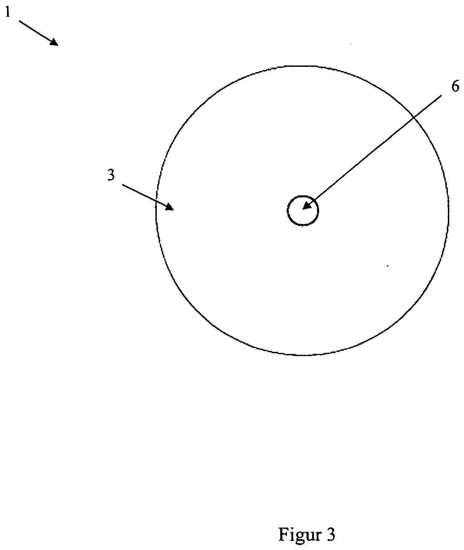

In Figuren 1-3 sind verschiedene Ansichten eines Ausführungsbeispiels einer Halterung 1 dargestellt. Insbesondere ist in Figur 1 eine Ansicht der Halterung 1 von der Seite gezeigt, in Figur 2 eine Ansicht von unten auf eine erste Seite 4 einer Grundplatte 2 mit Stiften 5, und in Figur 3 eine Ansicht von oben auf eine zweite, der ersten Seite 4 gegenüberliegende Seite 3 der Grundplatte 2.

Wie aus der Zusammenschau der Figuren ersichtlich, ist die Grundplatte 2 bei diesem Ausführungsbeispiel rund ausgebildet und weist eine erste Seite 4 und eine zweite Seite 3 auf.

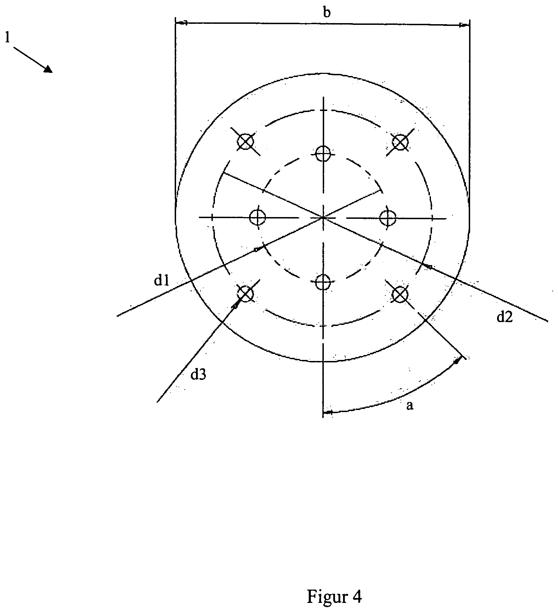

Auf der ersten Seite 4 sind länglich ausgebildete Stifte 5 von rundem Querschnitt gleichmäßig über die Grundplatte 2 verteilt, wie besonders in Figur 2 zu erkennen. Beim vorliegenden Ausführungsbeispiel sind die Stifte 5 bei einem Querschnittsdurchmesser d3 (s. Figur 4) von ca. 3,05 mm etwa 1,3 cm lang, während die Grundplatte 2 einen Durchmesser von etwas weniger als 6 cm aufweist.

Mittig auf der zweiten Seite 3 der Grundplatte 2 ist als Beispiel einer Einrichtung zum Befestigen einer Vorrichtung zum Halten einer Vorhangstange ein Schweißgewindebolzen 6 mit einem Außengewinde (nicht gezeigt) angebracht. Auf dieses Außengewinde kann jede Vorrichtung mit passendem Innengewinde, die zum Halten einer Vorhangstange oder eines anderen Gegenstands geeignet ist, aufgeschraubt und später beliebig ausgewechselt werden. Alternativ ist ein Adapter, z.B. in Form eines Stiftes, als Einrichtung zum Befestigen einer Vorrichtung zum Halten einer Vorhangstange an der Grundplatte 2 vorgesehen, der über eine Steckverbindung mit der Vorrichtung zum Halten einer Vorhangstange koppelbar ist. Die getrennte Ausführung von Halterung 1 und der Vorrichtung zum Halten der Vorhangstange erlaubt eine einfachere Montage, da die Halterung ohne die Vorrichtung zum Halten einfacher zu handhaben ist.

Figur 4 stellt am Beispiel der Halterung 1 aus den Figuren 1-3 eine Möglichkeit der Verteilung der Stifte über eine kreisförmige Grundplatte mit Durchmesser b dar, die die Größe der Grundplatte ausnützt und daher eine auf die angebrachte Halterung wirkende Kraft günstig auf mehrere verschiedene Wandpunkte verteilen kann.

Konkret sind die Hälfte der Stifte (4 von 8 Stiften) auf einer ersten gedachten Kreislinie mit einem Durchmesser d1 angeordnet und in gleichmäßigen Abständen auf ihr verteilt, so dass der Winkel zwischen jeweils zwei Stiften 90° beträgt. Die andere Hälfte der Stifte ist auf einer zweiten gedachten, größeren Kreislinie mit einem Durchmesser d2 angeordnet und in gleichmäßigen Abständen auf ihr verteilt, so dass der Winkel zwischen jeweils zwei Stiften ebenfalls 90° beträgt. Die Stifte auf den beiden Kreislinien sind um einen Winkel a von 45° gegeneinander versetzt.

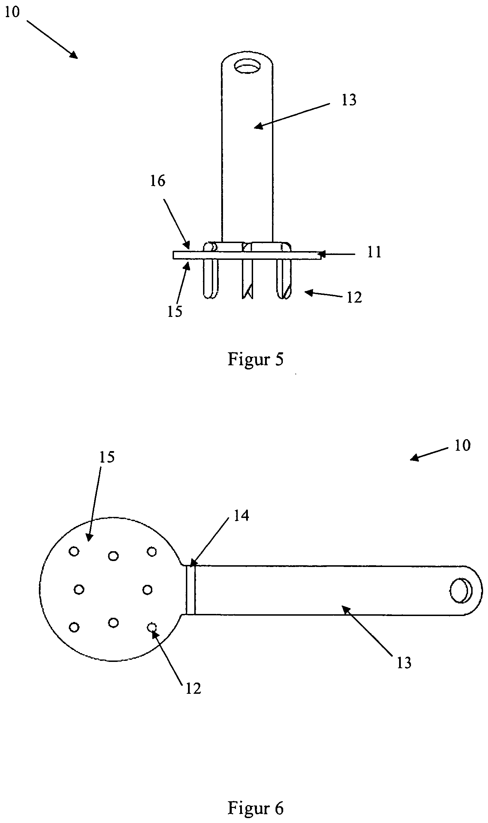

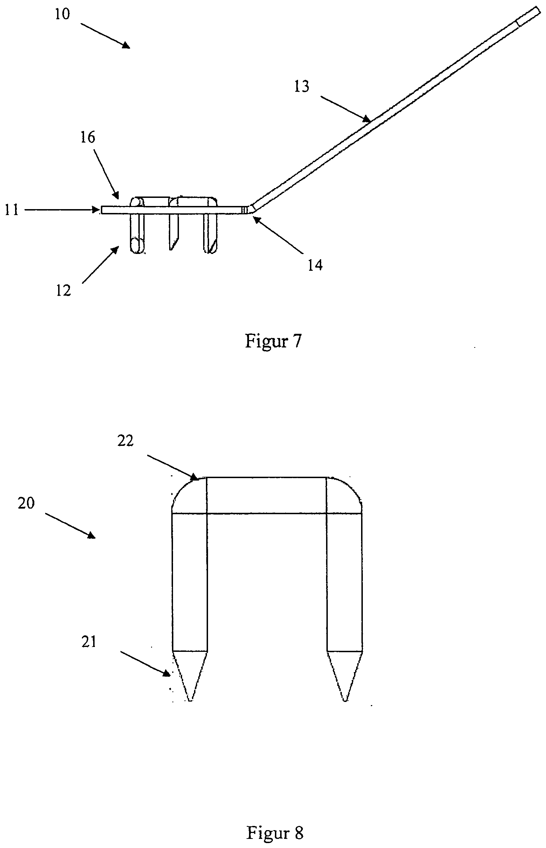

Figuren 5-7 stellen verschiedene Ansichten eines Ausführungsbeispiels einer Perforationsvorrichtung 10 dar. Insbesondere ist in Figur 7 eine Ansicht der Perforationsvorrichtung von der Seite gezeigt, in Figur 5 eine Ansicht, die gegenüber der Ansicht aus Figur 7 um 90° nach rechts gedreht ist, und in Figur 6 eine Ansicht von unten auf eine erste Seite 15 einer Grundplatte 11 mit Perforationselementen 12.

Die gezeigte Perforationsvorrichtung 10 ist auf die Halterung 1 aus Figuren 1-3 abgestimmt und kann daher dazu verwendet werden, Löcher zur Aufnahme der Stifte 5 der Halterung 1 auszubilden. Insbesondere weist die Perforationsvorrichtung 10 eine Grundplatte 11 auf, die, wie in Figur 6 zu erkennen, wie die Grundplatte 2 der Halterung 1 rund ausgebildet ist. Die Größe der Grundplatten 11 und 2 ist bei diesem Ausführungsbeispiel identisch (in den Figuren nicht zu erkennen, da unterschiedliche Maßstäbe gewählt wurden), so dass der Bediener beim Ausbilden der Löcher mittels der Perforationsvorrichtung 10 die spätere Lage der Halterung 1 gut abschätzen kann. Des Weiteren entspricht die Verteilung der Perforationselemente 12 (also ihr Abstand und ihre relative Lage), die auf der ersten Seite 16 der Grundplatte 11 der Perforationsvorrichtung 10 angeordnet sind, der Verteilung der Stifte 5 über die Grundplatte 2 (s. auch Figur 4). Des Weiteren ist die Form der Perforationselemente 12 an die Form der Stifte 5 angepasst: Die Perforationselemente sind - inklusive Spitze gemessen - ca. 1,6 cm, also etwas länger als die Stifte 5, und haben einen Durchmesser von 3,5 mm, sind also etwas dicker als die Stifte 5. Somit können mittels der Perforationsvorrichtung 10 Löcher ausgebildet werden, in welche die Stifte 5 einfach eingeführt werden können, und zwar auch dann, wenn sich Klebemittel in den Löchern oder an den Stiften 5 befindet.

Die Perforationselemente 12 werden vorliegend als U-förmig gebogene, runde Einzelteile gefertigt, die, wie an dem beispielhaften Perforationselement-Einzelteil 20 aus Figur 8 zu sehen, ein Verbindungsstück 22 aufweisen, welches zwei mit einer Spitze versehene Arme zu der U-Form verbindet. Das Einzelteil 20 aus Figur 8 unterscheidet sich lediglich dadurch von den für die Herstellung der Perforationsvorrichtung der Figuren 5-7 verwendeten Einzelteilen, dass die Arme des Einzelteils 20 nadelartig zu mittigen Spitzen 21 auslaufen. Die Enden der Perforationselemente 12 aus Figuren 5-7 wurden hingegen abgeschrägt und so angespitzt.

Für die Herstellung der Perforationsvorrichtung 10 werden die Arme von Einzelteilen, etwa das in Figur 8 gezeigte Einzelteil 20, durch jeweils zwei zu diesem Zweck vorgesehene Löcher in der Grundplatte 11 der Perforationsvorrichtung 10 gesteckt, so dass das Verbindungsstück (s. 22 in Figur 8) auf der zweiten Seite 15 der Grundplatte 11 der Perforationsvorrichtung 10 aufliegt, und in dieser Position mit der Grundplatte 11 verschweißt. Dem Fachmann ist klar, dass dies nur eines von vielen Beispielen der Herstellung einer Perforationsvorrichtung darstellt.

Bei dieser Herstellung liegen die Verbindungsstücke der Einzelteile auf der zweiten Seite 15 der Grundplatte 11 auf. Somit ist diese Seite der Grundplatte 11 nicht eben ausgebildet. Jedoch verlaufen mehrere Verbindungsstücke über die Grundplatte 11 (s. Figuren 5 und 7), die daher in einer Ebene liegen und damit eine geeignete Angriffsfläche für das Ausüben von Kraft bieten. So kann die Kraft durch einen Hammer auf die Verbindungsstücke aufgebracht werden, um die an eine Wand- oder Deckenfläche angesetzten Perforationselemente 12 einfach in die Wand- oder Deckenfläche zu treiben.

Nachdem die Perforationselemente 12 vollständig in die Wand- oder Deckenfläche getrieben wurden, liegt die erste Seite 16 der Grundplatte 11 an der Wand- oder Deckenfläche an. Um die Perforationselemente 12 wieder herausziehen zu können, ist die Grundplatte 11 der Perforationsvorrichtung 10 mit einem als Griff 13 dienenden Fortsatz versehen, der gegenüber der Grundplatte 11 in Richtung der zweiten Seite 15 der Grundplatte 11 an einem Knickpunkt 14 abgeknickt ist und somit in Bezug auf die zweite Seite 15 der Grundplatte 11 in einem Winkel kleiner als 180° verläuft. Stecken die Perforationselemente 12 in der Wand- oder Deckenfläche, steht der Fortsatz 13 daher in einem Winkel von der Wand- oder Deckenfläche ab. Somit kann ein Benutzer die Perforationselemente 12 am Fortsatz 13 aus der Wand- oder Deckenfläche herausziehen.

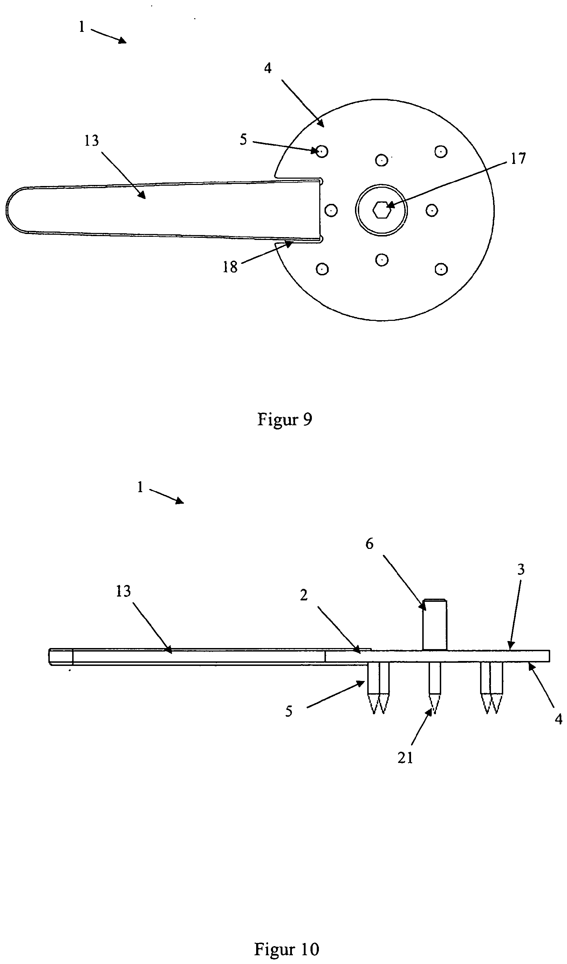

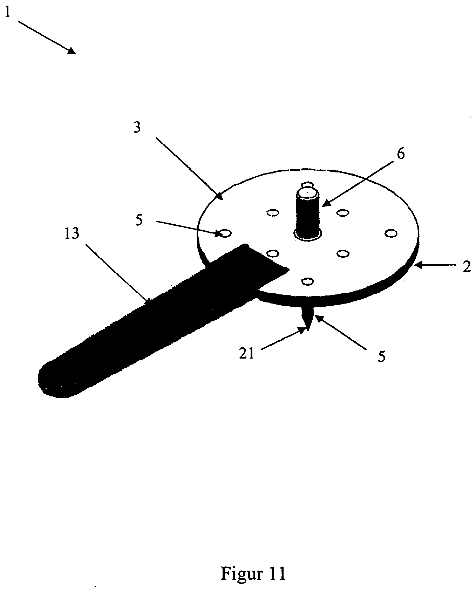

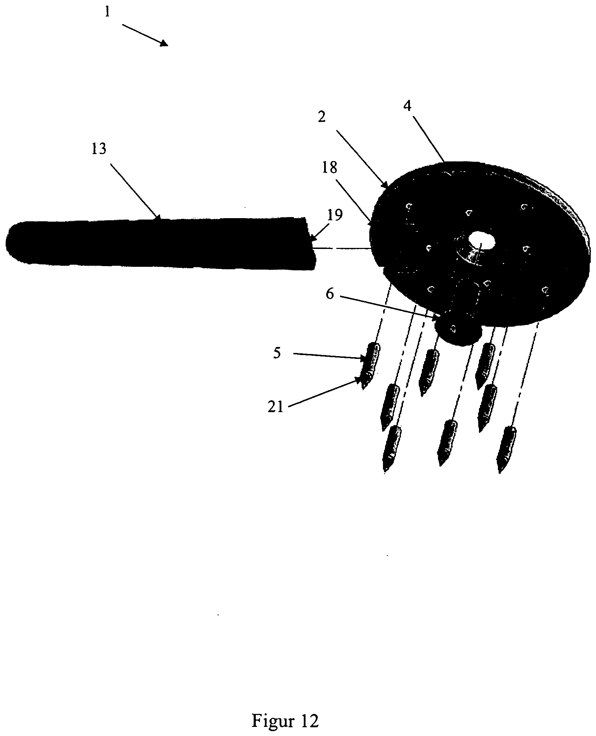

Figuren 9 bis 12 zeigen verschiedene Ansichten einer anderen Ausführungsform einer erfindungsgemäßen Halterung 1. Insbesondere handelt es sich bei Figur 9 um eine Draufsicht von unten auf die erste Seite 4 mit den Stiften 5 der Halterung 1; bei Figur 10 um eine Seitenansicht der Halterung 1 und bei Figur 11 um eine Ansicht schräg von oben auf die zweite Seite 3 der Halterung 1. Figur 12 ist eine Explosionsdarstellung einer Ansicht der Halterung 1 aus Figur 9 von schräg unten auf die erste Seite 4.

Ebenso wie die Halterung 1 aus den Figuren 1-4 weist die Halterung 1 eine runde Grundplatte 2 mit einer ersten Seite 4 und einer dieser ersten Seite 4 gegenüberliegenden, zweiten Seite 3 auf. Über die erste Seite 4 sind mehrere Stifte 5 verteilt. Die zweite Seite 3 weist eine Einrichtung 6 zum Befestigen einer Vorrichtung zum Halten einer Vorhangstange o. ä. auf, hier ein Gewindebolzen. Die Ausführungen zu den Figuren 1-4 gelten in Bezug auf diese Elemente entsprechend.

Von der in Bezug auf die vorangehenden Figuren beschriebenen Halterung 1 unterscheidet sich die Ausführungsform der Figuren 9 bis 12 dadurch, dass die Halterung 1 gleichzeitig als Perforationsvorrichtung ausgebildet ist. Zu diesem Zweck sind die Stifte 5 der Halterung 1 spitz ausgebildet. Insbesondere weisen die Stifte 5 eine Spitze 21 auf, wie oben in Bezug auf die Perforationselemente 20 beschrieben.

Des Weiteren umfasst die Halterung 1 eine Anbringeinrichtung für einen Griff 13. Der in Figuren 9-12 dargestellte Griff 13 ist länglich, flach und aus Plastik oder einem anderen billigen Material - das Material muss häufig nur wenige Anwendungen aushalten und daher keinen hohen Qualitätsansprüchen genügen. Teilweise wird ein etwas biegsames Material gewählt. Der Griff 13 dient dazu, die Halterung 1, nachdem sie - in ihrer Eigenschaft als Perforationsvorrichtung - zum Ausbilden der Löcher in eine Wand- oder Deckenfläche getrieben wurde, wieder aus der Wand- oder Deckenfläche herauszuziehen, um ein Klebemittel in die Löcher einführen zu können. Das Klebemittel kann dann etwa mittels Aufbringen auf die Stifte 5 und Einführen der Stifte 5 in die Löcher in die Löcher eingebracht werden. Anstatt den Griff 13 zu verwenden, kann der Bediener die Halterung in einer Ausführungsform auch am Gewindebolzen 6 aus den Löchern herausziehen, etwa wenn der Gewindebolzen stabil mit der Halterung verbunden ist und eine gute Greifmöglichkeit für den Bediener bietet. Dann wäre der Griff 13 mitsamt der Anbringeinrichtung obsolet.

Vorliegend ist die Anbringeinrichtung als zwei parallele Schlitze 18 in der Grundplatte 2 ausgebildet, die zum Außenumfang der Grundplatte 2 hin offen sind. Wie am besten in Figur 12 zu erkennen, kann so ein Griff 13 mit einer Aufnahmeöffnung 19 entsprechender Abmessungen auf den durch die Schlitze 18 definierten Grundplattenabschnitt in einer Steckverbindung aufgesetzt werden - die Aufnahmeöffnung wird einfach auf diesen Grundplattenabschnitt aufgeschoben, wie in Figur 9 und 10 zu sehen. In den meisten Ausführungsformen ist die Aufnahmeöffnung 19 des Griffs 13 so auf den durch die Schlitze 18 definierten Grundplattenabschnitt abgestimmt, dass der Griff 13 per Hand einfach auf den Grundplattenabschnitt aufgesetzt werden kann. Dies führt dazu, dass Zugkräfte entgegen der Aufsetzrichtung auf den Griff 13 nicht oder nur in geringem Maße auf die Halterung 1 übertragen werden, sondern vielmehr den Griff 13 wieder vom Grundplattenabschnitt abziehen. Kräfte, die in anderen Richtungen wirken, können hingegen auf die Halterung 1 übertragen werden.

Der Gewindebolzen der Halterung aus den Figuren 9-12 ist etwas anders ausgebildet als bei der Halterung nach den Figuren 1-4, nämlich als Schraube mit einem Innensechskant im Kopf. Diese Schraube kann von der ersten Seite 4 her durch eine Öffnung in der Grundplatte 2 geschoben werden, so dass ihr Gewinde auf der zweiten Seite 3 als Gewindebolzen 6 für eine Befestigung einer Vorhangstange o. ä. zur Verfügung steht. In einer Ausführungsform weist die Öffnung der Grundplatte 2 ein Gewinde auf, in welches die Schraube gedreht werden kann, um Halt in der Öffnung zu finden. In einer anderen Ausführungsform wird stattdessen auf der zweiten Seite 3 der Grundplatte 2 eine Mutter auf die Schraube gedreht. Bei wieder anderen Ausführungsformen sind die Abmessungen der Öffnung in der Grundplatte passgenau auf die Abmessungen der Schraube abgestimmt, so dass die Öffnung die Schraube im Presssitz aufnehmen kann. Alternativ ist die Schraube in der Öffnung festgeschweißt oder festgelötet. Diverse Alternativen sind denkbar.

Des Weiteren sind die Stifte 5 in der gezeigten Ausführungsform im Presssitz in Löchern in der Grundplatte 2 entsprechender Platzierung und Abmessung aufgenommen, so dass die Stifte 5 auf der zweiten Seite 3 der Grundplatte 2 sichtbar sind und mit dieser eben abschließen (s. Figur 11). Dieses Vorgehen ermöglicht eine besonders einfache Fertigung. Alternativ oder zusätzlich sind die Stifte 5 mit der Grundplatte 2 verschweißt. Andere Befestigungsmöglichkeiten sind ebenfalls denkbar.

## Patentansprüche

1. Satz aus einer Halterung (1) mit einer Grundplatte (2), die auf einer ersten Seite (4) mehrere über die Grundplatte (2) verteilte, fest mit der Grundplatte (2) verbundene Stifte (5) zur Befestigung der Halterung (1) an einer Wand- oder Deckenfläche aufweist, und einer Perforationsvorrichtung (10), wobei die Perforationsvorrichtung (10) eine Grundplatte (11) aufweist, die auf einer ersten Seite (15) mit mehreren über die Grundplatte (11) verteilten, spitzen Perforationselementen (12) versehen ist, und wobei die Verteilung der Stifte (5) über die Grundplatte (2) der Halterung (1) der Verteilung der Perforationselemente (12) über die Grundplatte (11) der Perforationsvorrichtung (10) entspricht.

2. Satz nach Anspruch 1, bei dem die Grundplatte (2) der Halterung (1) auf einer zweiten Seite (3) eine Vorrichtung zum Halten einer Vorhangstange oder eine Einrichtung (6) zum Befestigen einer Vorrichtung zum Halten einer Vorhangstange aufweist.

3. Satz nach Anspruch 1, bei der die Halterung (1) eine Anbringeinrichtung umfasst, die das Anbringen eines Griffs (13) an der Halterung (1) ermöglicht.

4. Satz nach Anspruch 3, bei der die Anbringeinrichtung zwei Schlitze (18) in der Grundplatte (2) umfasst, die einen Grundplattenabschnitt definieren, auf den ein entsprechender Aufnahmeabschnitt (19) des Griffs (13) aufsteckbar ist.

5. Satz nach einem der vorstehenden Ansprüche, der ausserdem einen Griff (13) umfaßt.

6. Satz nach einem der vorstehenden Ansprüche, bei dem eine zweite Seite (16) der Grundplatte (11) der Perforationsvorrichtung (10) eine Angriffsfläche für das Ausüben von Kraft bietet, und bei dem die Perforationsvorrichtung (10) einen Griff aufweist, der in Bezug auf eine durch die Grundplatte (11) der Perforationsvorrichtung (10) definierte Ebene in einem Winkel in Richtung der zweiten Seite (16) der Grundplatte (11) der Perforationsvorrichtung (10) verläuft.

7. Satz nach einem der vorstehenden Ansprüche, der ausserdem eine Portion eines Klebemittels umfasst.

8. Satz nach einem der vorstehenden Ansprüche, bei dem die Länge der Stifte (5) auf die übliche Dicke von Putzschichten an Gebäudeinnenwänden abgestimmt ist.

9. Verfahren zum Anbringen einer Halterung (1) mit einer Grundplatte (2), die auf einer ersten Seite (4) mit mehreren über die Grundplatte (2) verteilten, fest mit der Grundplatte (2) verbundenen Stiften (5) versehen ist, an einer Wand- oder Deckenfläche, umfassend:
Ausbilden mehrerer Löcher in der Wand- oder Deckenfläche, deren Verteilung über die Wand- oder Deckenfläche der Verteilung der Stifte (5) über die Grundplatte (2) der Halterung (1) entspricht, und
Einbringen eines Klebemittels in wenigstens eins der Löcher; und
Einführen der Stifte (5) der Halterung (1) in die Löcher,
wobei zum Ausbilden der Löcher eine Perforationsvorrichtung (10) verwendet wird, die eine Grundplatte (11) aufweist, die auf einer ersten Seite (15) mit mehreren über die Grundplatte (11) verteilten, spitzen Perforationselementen (12) versehen ist, wobei die Verteilung der Perforationselemente (12) über die Grundplatte (11) der Perforationsvorrichtung (10) der Verteilung der Stifte (5) über die Grundplatte (2) der Halterung (1) entspricht, die Perforationselemente (12) der Perforationsvorrichtung (10) an der Wand- oder Deckenfläche angesetzt werden, und Kraft auf eine zweite Seite der Grundplatte (11) der Perforationsvorrichtung (10) ausgeübt wird, um die Perforationselemente (12) in die Wand- oder Deckenfläche zu treiben und so die Löcher auszubilden.

10. Verfahren nach Anspruch 9, bei dem die Perforationselemente (12) nach dem Ausbilden der Löcher und vor dem Einbringen des Klebemittels in wenigstens eins der Löcher mittels eines an der Perforationsvorrichtung (10) angebrachten Griffs (13) aus der Wand- oder Deckenfläche herausgezogen werden.

## Claims

1. Set made up of a holder (1) having a baseplate (2), which on a first side (4) has a plurality of pins (5) which are distributed over the baseplate (2), are fixed to the baseplate (2) and are intended for fastening the holder (1) on a wall surface or ceiling surface, and of a perforation device (10), wherein the perforation device (10) has a baseplate (11), which on a first side (15) is provided with a plurality of pointed perforation elements (12) distributed over the baseplate (11), and wherein the distribution of the pins (5) over the baseplate (2) of the holder (1) corresponds to the distribution of the perforation elements (12) over the baseplate (11) of the perforation device (10).

2. Set according to Claim 1, wherein the baseplate (2) of the holder (1), on a second side (3), has a device for retaining a curtain rod or a means (6) for fastening a device for retaining a curtain rod.

3. Set according to Claim 1, wherein the holder (1) comprises a fitting device, which allows a handle (13) to be fitted on the holder (1).

4. Set according to Claim 3, wherein the fitting device comprises two slits (18) in the baseplate (2), which define a baseplate portion onto which a corresponding accommodating portion (19) of the handle (13) can be plugged.

5. Set according to one of the preceding claims, which also comprises a handle (13).

6. Set according to one of the preceding claims, wherein a second side (16) of the baseplate (11) of the perforation device (10) provides a force-exerting surface, and in the case of which the perforation device (10) has a handle which, in relation to a plane defined by the baseplate (11) of the perforation device (10), runs at an angle in the direction of the second side (16) of the baseplate (11) of the perforation device (10).

7. Set according to one of the preceding claims, which also comprises a portion of adhesive.

8. Set according to one of the preceding claims, wherein the length of the pins (5) is coordinated with the conventional thickness of plaster layers on interior building walls.

9. Method by means of which a holder (1) having a baseplate (2), which on a first side (4) is provided with a plurality of pins (5) which are distributed over the baseplate (2) and are fixed to the baseplate (2), is fitted on a wall surface or ceiling surface, comprising the following steps:
the formation of a plurality of holes in the wall surface or ceiling surface, the distribution of said holes over the wall surface or ceiling surface corresponding to the distribution of the pins (5) over the baseplate (2) of the holder (1), and
the introduction of an adhesive into at least one of the holes; and
the introduction of the pins (5) of the holder (1) into the holes,
wherein, in order to form the holes, use is made of a perforation device (10) which has a baseplate (11) which, on a first side (15), is provided with a plurality of pointed perforation elements (12) distributed over the baseplate (11), wherein the distribution of the perforation elements (12) over the baseplate (11) of the perforation device (10) corresponds to the distribution of the pins (5) over the baseplate (2) of the holder (1), the perforation elements (12) of the perforation device (10) are positioned on the wall surface or ceiling surface, and force is exerted on a second side of the baseplate (11) of the perforation device (10), in order for the perforation elements (12) to be driven into the wall surface or ceiling surface and for the holes to be formed as a result.

10. Method according to Claim 9, wherein, following the formation of the holes and prior to the adhesive being introduced into at least one of the holes, the perforation elements (12) are pulled out of the wall surface or ceiling surface by means of a handle (13) fitted on the perforation device (10).

## Revendications

1. Kit comprenant un support (1) avec une plaque de base (2), qui présente sur un premier côté (4) plusieurs tiges (5) connectées de manière fixe à la plaque de base (2), distribuées sur la plaque de base (2) pour la fixation du support (1) au niveau d'une surface de paroi ou de plafond, et un dispositif de perforation (10), dans lequel le dispositif de perforation (10) présente une plaque de base (11), qui est dotée sur un premier côté (15) de plusieurs éléments de perforation (12) pointus, distribués sur la plaque de base (11), et dans lequel la distribution des tiges (5) sur la plaque de base (2) du support (1) correspond à la distribution des éléments de perforation (12) sur la plaque de base (11) du dispositif de perforation (10).

2. Kit selon la revendication 1, où la plaque de base (2) du support (1) présente sur un deuxième côté (3), un dispositif de maintien d'une tringle à rideau ou un équipement (6) pour la fixation d'un dispositif de maintien d'une tringle à rideau.

3. Kit selon la revendication 1, où le support (1) comprend un équipement d'application qui permet l'application d'une poignée (13) au niveau du support (1).

4. Kit selon la revendication 3, où l'équipement d'application comprend deux fentes (18) dans la plaque de base (2) qui définissent une section de plaque de base, sur laquelle une section de réception (19) correspondante de la poignée (13) peut être enfichée.

5. Kit selon l'une quelconque des revendications précédentes, qui comprend en outre une poignée (13).

6. Kit selon l'une quelconque des revendications précédentes, où un deuxième côté (16) de la plaque de base (11) du dispositif de perforation (10) offre une surface d'attaque pour l'exercice d'une force, et où le dispositif de perforation (10) présente une poignée, qui s'étend par rapport à un plan défini par la plaque de base (11) du dispositif de perforation (10) selon un angle en direction du deuxième côté (16) de la plaque de base (11) du dispositif de perforation (10).

7. Kit selon l'une quelconque des revendications précédentes, qui présente également une portion d'un moyen d'adhésion.

8. Kit selon l'une quelconque des revendications précédentes, où la longueur des tiges (5) est ajustée sur l'épaisseur habituelle de couches d'enduit au niveau des parois intérieures des bâtiments.

9. Procédé d'application d'un support (1) avec une plaque de base (2), qui est dotée sur un premier côté (4) de plusieurs tiges (5) connectées de manière fixe à la plaque de base (2), distribuées sur la plaque de base (2), au niveau d'une surface de paroi ou de plafond, comprenant :
la réalisation de plusieurs trous dans la surface de paroi ou de plafond, dont la distribution sur la surface de paroi ou de plafond correspond à la distribution des tiges (5) sur la plaque de base (2) du support (1), et
l'insertion d'un moyen d'adhésion dans au moins un des trous ; et
l'introduction des tiges (5) du support (1) dans les trous,
dans lequel un dispositif de perforation (10) est utilisé pour la réalisation des trous, lequel présente une plaque de base (11), qui est dotée sur un premier côté (15) de plusieurs éléments de perforation (12) pointus, distribués sur la plaque de base (11), dans lequel la distribution des éléments de perforation (12) sur la plaque de base (11) du dispositif de perforation (10) correspond à la distribution des tiges (5) sur la plaque de base (2) du support (1), les éléments de perforation (12) du dispositif de perforation (10) sont rapportés sur la surface de paroi ou de plafond, et une force est exercée sur un deuxième côté de la plaque de base (11) du dispositif de perforation (10) pour pousser les éléments de perforation (12) dans la surface de paroi ou de plafond et réaliser ainsi les trous.

10. Procédé selon la revendication 9, où les éléments de perforation (12) sont retirés de la surface de paroi ou de plafond après la réalisation des trous et avant l'introduction du moyen d'adhésion dans au moins un des trous, au moyen d'une poignée (13) montée au niveau du dispositif de perforation (10).
